# EUROPEAN PATENT SPECIFICATION

(11) **EP 3 456 772 B1**
(45) Date of publication and mention of the grant of the patent: **22.07.2020**
(21) Application number: 17795770.1
(22) Date of filing: 01.02.2017
(51) Int. Cl.: C08L 21/00, B60C 1/00, C08K 3/04, C08K 5/1535, C08K 5/1545, C08L 7/00, C08L 9/00, C08J 5/00

(54) **RUBBER COMPOSITION, CROSSLINKED RUBBER, TIRE AND RUBBER ARTICLE**
KAUTSCHUKZUSAMMENSETZUNG, VERNETZTER KAUTSCHUK, REIFEN UND KAUTSCHUKARTIKEL
COMPOSITION DE CAOUTCHOUC, CAOUTCHOUC RÉTICULÉ, PNEU ET ARTICLE EN CAOUTCHOUC

(30) Priority: 12.05.2016 JP 2016096150
(43) Date of publication of application: 20.03.2019
(73) Proprietor: Bridgestone Corporation, Tokyo 104-8340 (JP)
(72) Inventor: SHODA, Yasuhiro, Tokyo 104-8340 (JP)
(74) Representative: Lang, Johannes
(86) International application number: PCT/JP2017/003609
(87) International publication number: WO 2017/195409

(56) References cited:
- JP-A- H09 118 786
- JP-A- H11 130 908
- JP-A- S57 212 243
- JP-A- 2005 325 172
- JP-A- 2006 299 122
- JP-A- 2013 529 725
- JP-A- 2017 019 922
- JP-A- 2017 031 372
- US-A- 5 717 022
- US-A1- 2009 043 039
- US-A1- 2013 184 387
- DATABASE WPI Week 199527 Thomson Scientific, London, GB; AN 1995-203975 XP002788624, & JP H07 118457 A (SUMITOMO CHEM CO LTD) 9 May 1995 (1995-05-09)

## Description

### Technical Field

The present invention relates to a rubber composition, a crosslinked rubber, a tire, and a rubber article.

### Background Art

For the purpose of improving functions of a rubber composition and a crosslinked rubber obtained by crosslinking it, various components are also used as additives of the rubber composition.

For example, PTL 1 discloses that (A) 100 parts by weight of a rubber selected from a natural rubber, a styrene butadiene copolymer rubber, a butadiene rubber, an isoprene rubber, an acrylonitrile butadiene copolymer rubber, a chloroprene rubber, a butyl rubber, and a halogenated butyl rubber, with (B) 0.5 to 10 parts by weight of a carbohydrate, (C) 0.5 to 10 parts by weight of a methoxylated methylolmelamine resin, and (D) a cobalt salt of a carboxylic acid in an amount of 0.05 to 1 part by mass in terms of a cobalt amount are mixed to thereby improve bonding properties in vulcanization bonding with a steel cord and a hardness of the rubber. JP H07 118457 discloses rubber compositions with a steel cord, based on NR and a carbohydrate like lactose (disaccharide). The saccharose is neither etherified nor esterified.

### Citation List

### Patent Literature

PTL 1: JP 07-118457 A

### Summary of Invention

### Technical Problem

However, in the rubber composition of PTL 1, crack resistance and elongation at break at a high temperature (100°C) of a vulcanized rubber obtained from the rubber composition were not excellent.

An object of the present invention is to provide a rubber composition, with a crosslinked rubber obtained from the rubber composition being excellent in crack resistance and elongation at break at a high temperature, the crosslinked rubber, and a tire and a rubber article including the rubber.

### Solution to Problem

<1> A rubber composition, containing: a cyclic polyol compound having a hydrocarbyl group and a hydroxy group and having two or more and ten or less cyclic structures; carbon black; and a rubber component, wherein the rubber component contains a diene-based rubber and the diene-based rubber contains a natural rubber.
<2> The rubber composition as set forth in <1>, wherein the cyclic polyol compound is represented by the following formula (1). 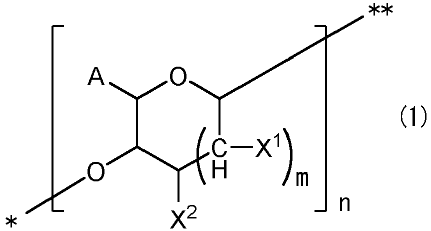 In the formula, A is a hydrocarbyl ester group having 6 to 30 carbon atoms, a hydrocarbyl ether group having 6 to 30 carbon atoms, or X⁰; m is 0 or 1; n represents a repeating unit of the cyclic structure and is an integer of 2 to 10; * represents a bonding position to ** of the cyclic structure contained in the adjacent repeating unit; when * is a terminal end, * is represented by X³, and when ** is a terminal end, ** is represented by X⁴; X⁰ to X⁴ are each independently -OH, -H, or -CH₂OH, provided that at least three of X¹ to X⁴ are -OH and at least one of A's is a hydrocarbyl ester group having 6 to 30 carbon atoms or a hydrocarbyl ether group having 6 to 30 carbon atom; and plural A's are the same or different, plural X^{1'}S are the same or different, and plural X^{2'}s are the same or different.
<3> The rubber composition as set forth in <1> or <2>, wherein an HLB value of the cyclic polyol compound is 6 or more.
<4> The rubber composition as set forth in any one of <1> to <3>, wherein an HLB value of the cyclic polyol compound is 15 or less.
<5> The rubber composition as set forth in any one of <1> to <4>, containing the cyclic polyol compound in an amount of 0.1 parts by mass or more and 4 parts by mass or less based on 100 parts by mass of the rubber component.
<6> The rubber composition as set forth in any one of <1> to <5>, wherein the rubber component consists of only a natural rubber.
<7> The rubber composition as set forth in any one of <1> to <6>, wherein the cyclic polyol compound is represented by the following formula (2). 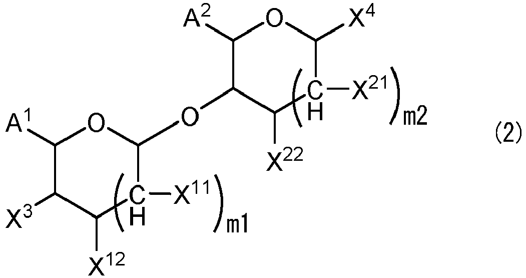 In the formula, A¹ and A² are each independently a hydrocarbyl ester group having 6 to 30 carbon atoms, a hydrocarbyl ether group having 6 to 30 carbon atoms, or X⁰; m1 and m2 are each independently 0 or 1; and X⁰, X¹¹, X¹², X²¹, X²², X³, and X⁴ are each independently -OH, -H, or -CH₂OH, provided that at least three of X¹¹, X¹², X²¹, X²², X³, and X⁴ are -OH.
<8> A crosslinked rubber, which is prepared by crosslinking the rubber composition as set forth in any one of <1> to <7>.
<9> A tire including the crosslinked rubber as set forth in <8>.
<10> A rubber article including the crosslinked rubber as set forth in <8>.

### Advantageous Effects of Invention

In accordance with the present invention, it is possible to provide a rubber composition, a crosslinked rubber, a tire, and a rubber article, in which a crosslinked rubber obtained from the rubber composition is excellent in crack resistance and elongation at break at a high temperature.

### Description of Embodiments

### <Rubber Composition>

The rubber composition of the present invention contains a cyclic polyol compound having a hydrocarbyl group and a hydroxy group and having two or more and ten or less cyclic structures; carbon black; and a rubber component.

When the rubber composition contains a cyclic polyol compound having a hydrocarbyl group and a hydroxy group and having two or more and ten or less cyclic structures and carbon black together with a rubber component and is crosslinked, the crosslinked rubber is excellent in crack resistance and elongation at break (EB) at a high temperature.

In general, the rubber component is hydrophobic, and therefore, a cyclic polyol compound not having a hydrocarbyl group, which is used as the carbohydrate (B) in PTL 1, is hardly intermixed with the rubber component, and a stable rubber composition cannot be obtained. On the other hand, the cyclic polyol compound which the rubber composition of the present invention contains has a hydrocarbyl group, and therefore, it becomes easy to be intermixed with a hydrophobic rubber component. Accordingly, the rubber composition is excellent in processability.

As is clear from substituents Z¹ to Z¹² bonded to ring-forming carbon atoms of the following cyclohexane ring, the substituents bonded to ring-forming carbon atoms of a cyclic structure represented by a cyclohexane ring face toward various directions.

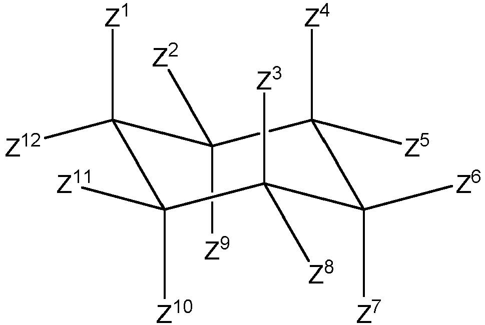

In consequence, when the cyclic structure has a hydroxy group, the hydroxy group faces toward various directions. In this way, the hydroxy group is oriented in various directions, and therefore, as compared with a linear polyol compound in which the hydroxy group is oriented on a straight line, in a polyol compound of a cyclic structure having a hydroxy group, the direction in which the polyol compound, the rubber component, and the carbon black interact is hardly limited to one direction and interact in various directions. By introducing a hydrocarbyl group having a fixed carbon number into the cyclic compound, dispersibility in the rubber composition is improved, and the crack resistance and the elongation at break at a high temperature (100°C) can be improved.

Accordingly, it may be considered that physical characteristics of a crosslinked rubber obtained by crosslinking the rubber composition are homogenized, and the crosslinked rubber is excellent in fracture resistance characteristics, particularly crack resistance.

In the light of the above, though the characteristics of the rubber composition such that it is excellent in processability and also excellent in crack resistance could be realized even by a cyclic polyol compound having only one cyclic structure having a hydroxy group, the elongation at break at a high temperature (100°C) of the crosslinked rubber was not further made excellent.

However, it may be considered that when the cyclic polyol compound has a hydrocarbyl group and a hydroxy group and has two or more and ten or less cyclic structures, the interaction among the polyol compound, the rubber component, and the carbon black is more enhanced, a great improvement in the crack resistance and an improvement in the elongation at break at a high temperature (100°C) can be realized.

Each of the components which are contained in the rubber composition of the present invention is hereunder described in detail.

### [Rubber Component]

The rubber composition of the present invention contains a rubber component.

The rubber component of the rubber composition of the present invention contains a diene-based rubber. Though a natural rubber and a synthetic rubber can be used, it is preferred that a diene-based rubber is contained as a main component.

The wording "main component" indicates that 70% by mass or more of the diene-based rubber is contained in the rubber component, and the content of the diene-based rubber in the rubber component is preferably 80% by mass or more, more preferably 90% by mass or more, and still more preferably 95% by mass or more.

The diene-based rubber contains a natural rubber. Examples of the diene-based rubber include, in addition to the natural rubber, synthetic rubbers, such as a polyisoprene rubber, a polybutadiene rubber, a styrene-butadiene copolymer, an ethylene-propylene-diene copolymer, a chloroprene rubber, a halogenated butyl rubber, and an acrylonitrile diene rubber. The synthetic rubber is preferably a styrene-butadiene copolymer (SBR).

Examples of a rubber other than the diene-based rubber include a butyl rubber, an ethylene propylene rubber, a urethane rubber, a silicone rubber, and an acrylic rubber.

The rubber component may be used alone or may be used in combination of two or more thereof.

### [Cyclic Polyol Compound Having a Hydrocarbyl Group and a Hydroxy Group and Having Two or More and Ten or Less Cyclic Structures]

The rubber composition of the present invention contains a cyclic polyol compound having a hydrocarbyl group and a hydroxy group and having two or more and ten or less cyclic structures (such a cyclic polyol compound will be hereinafter referred to as "specified cyclic polyol compound"). The cyclic structure is a 4- to 8-membered ring containing, as ring-forming atoms, at least carbon atom and further an atom selected from the group consisting of an oxygen atom, a sulfur atom, and a nitrogen atom.

The specified cyclic polyol compound has a hydrocarbyl group and a hydroxy group and has two or more and ten or less cyclic structures. The two or more and ten or less cyclic structures may have one or both of one or plural hydrocarbyl groups and hydroxy groups per one cyclic structure and have a hydrocarbyl group and a hydroxy group as the whole of the specified cyclic polyol compound.

For example, the specified cyclic polyol compound composed of two cyclic structures may be a constitution in which one of the cyclic structures has one or plural hydrocarbyl groups, and the other cyclic structure has one or plural hydroxy groups, or both of the two cyclic structures have one or plural hydroxy groups and one or plural hydrocarbyl groups.

From the viewpoint of a balance between hydrophilicity and hydrophobicity (lipophilicity) of the specified cyclic polyol compound, it is preferred that the specified cyclic polyol compound has one or plural hydroxy groups in all of the cyclic structures and has a hydrocarbyl group in one cyclic structure.

In the specified cyclic polyol compound, from the viewpoint of a balance between an improvement in compatibility with the rubber component by the hydrocarbyl group and a steric hindrance of the hydrocarbyl group, an HLB (hydrophile-lipophile balance) value is preferably 6 to 15.

When the HLB value is 15 or less, the compatibility with the rubber component is thoroughly obtained, and when it is 6 or more, the steric hindrance of the hydrocarbyl group can be suppressed.

The HLB value can be calculated by {7 + 11.7 log ((sum total of formula weight of hydrophilic moiety of specified cyclic polyol compound)/(sum total of formula weight of lipophilic moiety of specified cyclic polyol compound))}.

The lipophilic moiety of the specified cyclic polyol compound refers to an alkyl side chain of the hydrocarbyl group, and the lipophilic moiety of the specified cyclic polyol compound refers to a site other than the hydrophilic moiety of the specified cyclic polyol compound.

From the viewpoint of steric hindrance and compatibility, the HLB value of the specified cyclic polyol compound is more preferably 6 or more, and still more preferably 9.5 or more. In addition, the HLB value of the specified cyclic polyol compound is more preferably 15 or less, and still more preferably 13 or less.

More specifically, the specified cyclic polyol compound is preferably represented by the following formula (1).

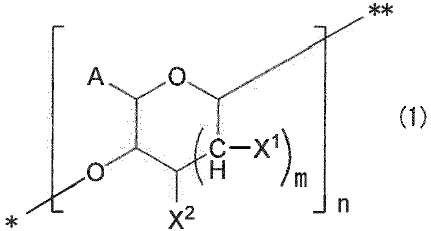

In the formula, A is a hydrocarbyl ester group having 6 to 30 carbon atoms, a hydrocarbyl ether group having 6 to 30 carbon atoms, or X⁰; m is 0 or 1; n represents a repeating unit of the cyclic structure and is an integer of 2 to 10; * represents a bonding position to ** of the cyclic structure contained in the adjacent repeating unit; when * is a terminal end, * is represented by X³, and when ** is a terminal end, ** is represented by X⁴; X⁰ to X⁴ are each independently -OH, -H, or -CH₂OH, provided that at least three of X¹ to X⁴ are -OH and at least one of A's is a hydrocarbyl ester group having 6 to 30 carbon atoms or a hydrocarbyl ether group having 6 to 30 carbon atoms; and plural A's are the same or different, plural X^{1'}s are the same or different, and X^{2'}s are the same or different.

Though the hydrocarbyl ester group may be either a fatty acid ester group or a phosphoric acid ester group, it is preferably a fatty acid ester group from the viewpoint of compatibility between the specified cyclic polyol compound and the rubber component.

In the case where the hydrocarbyl group is expressed by R, the hydrocarbyl fatty acid ester group is preferably represented by -CH₂COOR. Here, R is preferably an alkyl group having 5 to 29 carbon atoms or an aryl group having 5 to 29 carbon atoms.

Examples of the alkyl group include linear, branched, or cyclic alkyl groups. Specifically, examples thereof include a n-butyl group, a tert-butyl group, a n-hexyl group, a cyclohexyl group, a n-octyl group, a n-decyl group, a n-dodecyl group, and a n-hexadecyl group.

Examples of the aryl group include a phenyl group and a naphthyl group.

The hydrocarbyl group is preferably a linear or branched alkyl group, the carbon number of which is more preferably 4 to 20, and still more preferably 4 to 15.

In the case where the hydrocarbyl group is expressed by R, the hydrocarbyl ether group is preferably represented by -CH₂OR. Embodiments and preferred embodiments of R are the same as those of R in the case where the hydrocarbyl fatty acid ester group is represented by -CH₂COOR.

In the ring in which A is a hydrocarbyl ester group having 6 to 30 carbon atoms or a hydrocarbyl ether group having 6 to 30 carbon atoms, m is preferably 1, and when A is X⁰, m is preferably 0.
n is preferably an integer of 2 to 8, more preferably an integer of 2 to 6, and still more preferably an integer of 2 to 4.

X⁰ and X⁴ are each preferably -CH₂OH; X¹ and X² are each preferably - OH; and X³ is preferably -H.

A preferred combination in the formula (1) is a combination in which A is represented by -CH₂COOR; R is a linear or branched alkyl group having 5 to 20 carbon atoms; m is 0 or 1; n is an integer of 2 to 4; X⁰ and X⁴ are each - CH₂OH; X¹ and X² are each -OH; and X³ is -H.

Furthermore, it is preferred that the specified cyclic polyol compound is represented by the following formula (2).

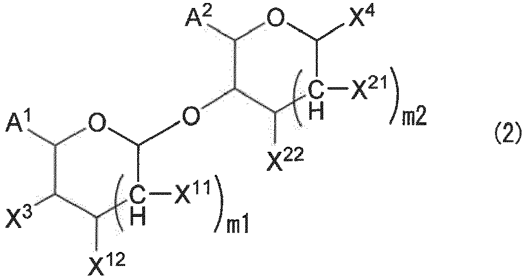

In the formula, A¹ and A² are each independently a hydrocarbyl ester group having 6 to 30 carbon atoms, a hydrocarbyl ether group having 6 to 30 carbon atoms, or X⁰; m1 and m2 are each independently 0 or 1; and X⁰, X¹¹, X¹², X²¹, X²², X³, and X⁴ are each independently -OH, -H, or -CH₂OH, provided that at least three of X¹¹, X¹², X²¹, X²², X³, and X⁴ are -OH.

Specific contents and preferred embodiments of the hydrocarbyl ester group and the hydrocarbyl ether group in the formula (2) are the same as those in the hydrocarbyl ester group and the hydrocarbyl ether group in the formula (1).

Though both of A¹ and A² may be either a hydrocarbyl ester group having 6 to 30 carbon atoms or a hydrocarbyl ether group having 6 to 30 carbon atoms, it is preferred that either one of them is a hydrocarbyl ester group having 6 to 30 carbon atoms or a hydrocarbyl ether group having 6 to 30 carbon atoms, with the other being X⁰.

As for m1 and m2, when A¹ is a hydrocarbyl ester group having 6 to 30 carbon atoms or a hydrocarbyl ether group having 6 to 30 carbon atoms, it is preferred that m1 is 1, and m2 is 0; and when A² is a hydrocarbyl ester group having 6 to 30 carbon atoms or a hydrocarbyl ether group having 6 to 30 carbon atoms, it is preferred that m2 is 1, and m1 is 0.

Above all, it is preferred that A¹ is a hydrocarbyl ester group having 6 to 30 carbon atoms or a hydrocarbyl ether group having 6 to 30 carbon atoms, m1 is 1, and m2 is 0.

X⁰ and X⁴ are each preferably -CH₂OH; X¹¹, X¹², X²¹, and X²² are each preferably -OH; and X³ is preferably -H.

A preferred combination in the formula (2) is a combination in which A¹ is represented by -CH₂COOR; R is a linear or branched alkyl group having 5 to 20 carbon atoms; m1 is 1; m2 is 0; X⁰ and X⁴ are each -CH₂OH; X¹¹, X¹², X²¹, and X²² are each -OH; and X³ is -H.

As the specified cyclic polyol compound, commercially available products may be used.

For example, DK ESTER SS (monoester 100%, HLB = 19), DK ESTER F-110 (monoester/di·tri·polyester = mass ratio: 50/50, HLB = 11), DK ESTER F-90 (monoester/di·tri·polyester = mass ratio: 45/55, HLB = 9.5), DK ESTER F-70 (monoester/di·tri·polyester = mass ratio: 40/60, HLB = 8), DK ESTER F-50 (monoester/di·tri·polyester = mass ratio: 30/70, HLB = 6), and DK ESTER F-160 (HLB = 15), all of which are manufactured by Dai-ichi Kogyo Seiyaku, Co., Ltd., and so on can be used. In the above, the monoester means a mixture in which a stearic acid monoester and a palmitic acid monoester are mixed in a ratio of 70/30 in terms of a mass ratio of the stearic acid monoester to the palmitic acid monoester.

In the rubber composition of the present invention, the specified cyclic polyol compound may be used alone or in admixture of two or more thereof.

The content of the specified cyclic polyol compound in the rubber composition of the present invention is preferably 0.1 parts by mass or more and 4 parts by mass or less based on 100 parts by mass of the rubber component. When the content of the specified cyclic polyol compound is 0.1 parts by mass or more based on 100 parts by mass of the rubber component, the crack resistance of the crosslinked rubber can be more improved, and when it is 4 parts by mass or less, the elongation at break at a high temperature (100°C) of the crosslinked rubber is excellent.

The content of the specified cyclic polyol compound in the rubber composition of the present invention is more preferably 0.1 parts by mass or more, and still more preferably 0.5 parts by mass or more based on 100 parts by mass of the rubber component. In addition, the foregoing content is more preferably 10 parts by mass or less, and still more preferably 4 parts by mass or less based on 100 parts by mass of the rubber component.

### [Carbon Black]

The rubber composition of the present invention contains carbon black.

The carbon black is known as a reinforcing material for increasing tensile strength, strength at break, modulus, hardness, etc. as well as improving wear resistance, tensile resistance, etc., and so on, regarding crosslinked rubbers.

Examples of the carbon black include channel black, furnace black, acetylene black, and thermal black depending upon the production method, and all of them can be used. In addition, carbon blacks of various grades, such as SAF, HAF, ISAF, FEF, and GPF, can be used.

The carbon black can be used either alone or in admixture of two or more thereof.

The content of the carbon black in the rubber composition of the present invention is not particularly limited and can be properly chosen according to the object. The content of the carbon black is preferably 10 to 100 parts by mass, more preferably 10 to 70 parts by mass, and still more preferably 20 to 60 parts by mass based on 100 parts by mass of the rubber component.

When the content of the carbon black is 10 parts by mass or more based on 100 parts by mass of the rubber component, lowering of the crack resistance can be prevented from occurring, and when it is 100 parts by mass or less, worsening in processability and low loss properties can be prevented from occurring.

### (Filler)

The rubber composition of the present invention may contain a filler other than the carbon black.

Examples of the filler other than the carbon black include inorganic fillers.

Examples of the inorganic filler include metal oxides, such as silica and alumina, and above all, silica is preferred. As the silica, any of commercially available products can be used, and examples thereof include wet method silica, dry method silica, and colloidal silica.

The filler can be used either alone or in admixture of two or more thereof.

In the case where the rubber composition of the present invention contains silica as the filler, it is preferred that the rubber composition is further mixed with a silane coupling agent. As the silane coupling agent, known compounds can be used.

### [Crosslinking Agent]

It is preferred that the rubber composition of the present invention contains a crosslinking agent.

The crosslinking agent is not particularly limited, and compounds other than a vulcanizing agent, such as epoxy compounds, can be used. However, in general, a vulcanizing agent is used. Sulfur is used as the vulcanizing agent, and examples thereof include vulcanizing agents, such as powdered sulfur, precipitated sulfur, colloidal sulfur, surface-treated sulfur, and insoluble sulfur.

In the rubber composition of the present invention, the content of the crosslinking agent (vulcanizing agent) is preferably 0.1 to 10 parts by mass based on 100 parts by mass of the rubber component. When this content is 0.1 parts by mass or more, crosslinking (vulcanization) can be thoroughly advanced, and when it is 10 parts by mass or less, aging resistance of the crosslinked (vulcanized) rubber can be suppressed.

The content of the crosslinking agent (vulcanizing agent) in the rubber composition is more preferably 0.5 to 7.0 parts by mass, and still more preferably 1.0 to 5.0 parts by mass based on 100 parts by mass of the rubber component.

### [Other Compounding Agents]

In the rubber composition of the present invention, compounding agents which are typically used in the rubber industry, such as a vulcanization accelerator; a vulcanization retardant; a process oil, e.g., an aromatic oil; a plasticizer, e.g., a wax; a fatty acid, e.g., stearic acid; an antioxidant; an alicyclic hydrocarbon resin that is a petroleum resin produced using dicyclopentadiene as a main raw material; and an aliphatic hydrocarbon resin that is a petroleum resin produced using a C5 fraction or C9 fraction of petroleum as a main raw material, can be contained together with the aforementioned rubber component, specified cyclic polyol compound, carbon black, filler, and crosslinking agent (vulcanizing agent), within a range where the effects of the present invention are not impaired.

### <Production Method of Rubber Composition>

On producing the rubber composition of the present invention, the rubber composition can be produced by mixing, in addition to the aforementioned rubber component, specified cyclic polyol compound, and carbon black, optionally the crosslinking agent (vulcanizing agent) and the aforementioned compounding agents, etc., and kneading them using a kneading machine, such as a Banbury mixer, a roll, and an internal mixer.

Here, the mixing amounts of the rubber component, the specified cyclic polyol compound, the carbon black, the crosslinking agent (vulcanizing agent), and the like are the same as those mentioned previously as the contents in the rubber composition.

The kneading of the respective components may be performed totally by one stage or may be performed by dividing into two or more stages, and for example, a method in which in a first stage, the rubber component, the carbon black, the specified cyclic polyol compound, and other compounding components other than the vulcanizing agent are kneaded, and in a second stage, the vulcanizing agent is kneaded is exemplified. Examples of the other compounding components which may be mixed together with the rubber component in the first stage include a process oil, a plasticizer (wax), and a fatty acid, which the rubber composition of the present invention may contain, as the need arises.

A maximum temperature in the first stage of kneading is preferably set to 140 to 160°C, and a maximum temperature in the second stage is preferably set to 90 to 120°C.

### <Crosslinked Rubber and Its Applications>

The crosslinked rubber of the present invention is one prepared by crosslinking the rubber composition of the present invention as mentioned previously.

The crosslinking method of the rubber composition is not particularly limited, and known crosslinking methods can be adopted.

The thus obtained crosslinked rubber of the present invention is suitably used for rubber articles, such as a tire, a conveyor belt, and a hose.

When the crosslinked rubber of the present invention is used for, as a tire, a tire including a steel cord, such as automobile tires, local orientation of a hydroxy group against the steel cord is suppressed due to orientation control of the hydroxy group of the cyclic polyol, and adsorption onto the steel cord can be suppressed, and the original functions can be maintained.

### Examples

Next, the present invention is described in more detail by reference with Examples, but it should be construed that the present invention is by no means limited by these Examples.

### <Examples 1 to 6 and Comparative Examples 1 to 2>

Components having a composition shown in Table 1 were kneaded using a Banbury mixer and vulcanized at 145°C for 33 minutes, thereby obtaining vulcanized rubbers. Polyols P1 to P3 for the Examples and Polyol P101 were prepared in the following manner.

### (Polyol P1)

DK ESTER F-90 (monoester/di·tri·polyester = mass ratio: 45/55, HLB = 9.5), manufactured by Dai-ichi Kogyo Seiyaku Co., Ltd. was used.

### (Polyol P2)

DK ESTER F-110 (monoester/di·tri·polyester = mass ratio: 50/50, HLB = 11), manufactured by Dai-ichi Kogyo Seiyaku Co., Ltd. was used.

### (Polyol P3)

DK ESTER F-160 (HLB = 15), manufactured by Dai-ichi Kogyo Seiyaku Co., Ltd. was used.

### (Polyol P101)

"MYDOL 10", manufactured by Kao Corporation was purified by distillation under reduced pressure, to obtain Polyol 101.

Polyol 101 is one represented by the formula (1), wherein n is 1; A is - OR; R is a linear decyl group having 10 carbon atoms; X¹ and X² are each -OH; X³ is -H; and X⁴ is -CH₂OH.

### <Evaluation>

### 1. Evaluation of elongation at break at a high temperature (100°C)

The obtained vulcanized rubber was molded in a form of a ring-shaped test piece No. 2, and the elongation at break of the vulcanized rubber test piece at 100°C was measured at room temperature in conformity with JIS K6251:2010. The measured elongation at break was expressed as an index while defining the measurement result of Comparative Example 1 as 100. It is indicated and as the index value is larger, the elongation at break is more excellent. The results are shown in Table 1.

### 2. Tear Strength

A trouser-shaped test piece was prepared as a test piece and subjected to a tear test in conformity with JIS K-6252:2015. A maximum tearing force of the test piece up to cutting was determined and expressed as an index while defining the measurement result of Comparative Example 1 as 100. It is indicated that as the index value is larger, the crack resistance is higher, and the cracking resistance is more excellent. The results are shown in Table 1.

**Table 1**

| | | Comparative Example 1 | Comparative Example 2 | Example 1 | Example 2 | Example 3 | Example 4 | Example 5 | Example 6 |
|---|---|---|---|---|---|---|---|---|---|
| Rubber composition (parts by mass) | Natural rubber ^{(*1)} | 100 | 100 | 100 | 100 | 100 | 100 | 100 | 100 |
| | Polyol (kind) | - | P101 | P1 | P2 | P3 | P2 | P2 | P2 |
| | Polyol (amount) | - | 2 | 2 | 2 | 2 | 0.1 | 10 | 4 |
| | Carbon black ^{(*2)} | 40 | 40 | 40 | 40 | 40 | 40 | 40 | 40 |
| | Stearic acid | 2 | 2 | 2 | 2 | 2 | 2 | 2 | 2 |
| | Zinc oxide | 3.5 | 3.5 | 3.5 | 3.5 | 3.5 | 3.5 | 3.5 | 3.5 |
| | Wax | 1.5 | 1.5 | 1.5 | 1.5 | 1.5 | 1.5 | 1.5 | 1.5 |
| | Resin | 1.0 | 1.0 | 1.0 | 1.0 | 1.0 | 1.0 | 1.0 | 1.0 |
| | Antioxidant ^{(*3)} | 1.0 | 1.0 | 1.0 | 1.0 | 1.0 | 1.0 | 1.0 | 1.0 |
| | Vulcanization accelerator ^{(*4)} | 1.5 | 1.5 | 1.5 | 1.5 | 1.5 | 1.5 | 1.5 | 1.5 |
| | Sulfur | 2.0 | 2.0 | 2.0 | 2.0 | 2.0 | 2.0 | 2.0 | 2.0 |
| Evaluation | Elongation at break at 100°C | 100 | 95 | 103 | 107 | 105 | 101 | 107 | 110 |
| | Tear strength | 100 | 108 | 127 | 134 | 126 | 115 | 144 | 144 |

| | | | | | | | | | |
|---|---|---|---|---|---|---|---|---|---|
| Details of the compounding components shown in Table 1 are as follows. *1) Natural rubber: TSR#20 *2) Carbon black: Carbon Black N234 *3) Antioxidant: Manufactured by Ouchi Shinko Chemical Industrial Co., Ltd., a trade name: "NOCRAC 6C", N-(1,3-dimethylbutyl)-N'-phenyl-p-phenylenediamine *4) Vulcanization accelerator: N-Cyclohexyl-2-benzothiazolylsulfenamide | | | | | | | | | |

As noted from Table 1, Comparative Examples 1 to 2, in which the cyclic polyol compound is not contained, or even when the cyclic polyol compound is contained, it does not have two or more cyclic structures, were not excellent in the elongation at break at a high temperature (100°C), weak in the tear strength, and not excellent in the crack resistance.

On the other hand, Examples 1 to 6 containing the cyclic polyol compounds P1 to P3 having a hydrocarbyl group and a hydroxy group and having two or more and ten or less cyclic structures, respectively are not only excellent in the elongation at break at a high temperature but also excellent in the crack resistance.

### Industrial Applicability

Since the rubber composition of the present invention is excellent in the crack resistance and the elongation at break at a high temperature with respect to the crosslinked rubber obtained from the rubber composition is excellent, the crosslinked rubber of the present invention is suitable for rubber articles, such as a tire, a conveyor belt, and a hose.

## Claims

1. A rubber composition, comprising: a cyclic polyol compound having a hydrocarbyl group and a hydroxy group and having two or more and ten or less cyclic structures; carbon black; and a rubber component, wherein the rubber component contains a diene-based rubber and the diene-based rubber contains a natural rubber.

2. The rubber composition according to claim 1, wherein the cyclic polyol compound is represented by the following formula (1): 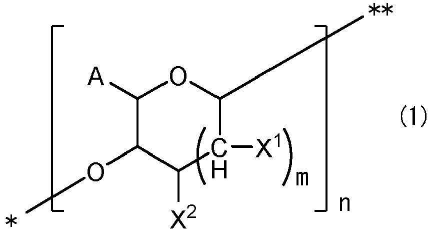 wherein A is a hydrocarbyl ester group having 6 to 30 carbon atoms, a hydrocarbyl ether group having 6 to 30 carbon atoms, or X⁰; m is 0 or 1; n represents a repeating unit of the cyclic structure and is an integer of 2 to 10; * represents a bonding position to ** of the cyclic structure contained in the adjacent repeating unit; when * is a terminal end, * is represented by X³, and when ** is a terminal end, ** is represented by X⁴; X⁰ to X⁴ are each independently -OH, -H, or -CH₂OH, provided that at least three of X¹ to X⁴ are -OH and at least one of A's is a hydrocarbyl ester group having 6 to 30 carbon atoms or a hydrocarbyl ether group having 6 to 30 carbon atoms; and plural A's are the same or different, plural X¹'s are the same or different, and plural X²'s are the same or different.

3. The rubber composition according to claim 1 or 2, wherein an HLB value of the cyclic polyol compound is 6 or more.

4. The rubber composition according to any one of claims 1 to 3, wherein an HLB value of the cyclic polyol compound is 15 or less.

5. The rubber composition according to any one of claims 1 to 4, comprising the cyclic polyol compound in an amount of 0.1 parts by mass or more and 4 parts by mass or less based on 100 parts by mass of the rubber component.

6. The rubber composition according to any one of claims 1 to 5, wherein the rubber component consists of only a natural rubber.

7. The rubber composition according to any one of claims 1 to 6, wherein the cyclic polyol compound is represented by the following formula (2): 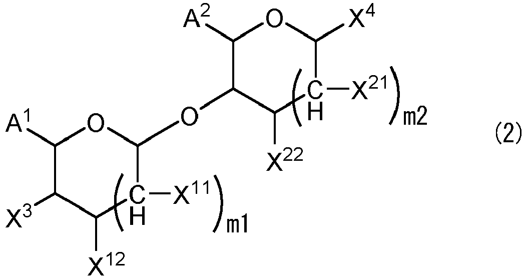 wherein A¹ and A² are each independently a hydrocarbyl ester group having 6 to 30 carbon atoms, a hydrocarbyl ether group having 6 to 30 carbon atoms, or X⁰; m1 and m2 are each independently 0 or 1; and X⁰, X¹¹, X¹², X²¹, X²², X³, and X⁴ are each independently -OH, -H, or -CH₂OH, provided that at least three of X¹¹, X¹², X²¹, X²², X³, and X⁴ are -OH.

8. The rubber composition according to any one of claims 1 to 7,
wherein 70% by mass or more of the diene-based rubber is contained in the rubber component; and
wherein the diene-based rubber consists of natural rubber.

9. A crosslinked rubber, which is prepared by crosslinking the rubber composition according to any one of claims 1 to 8.

10. A tire comprising the crosslinked rubber according to claim 9.

11. A rubber article comprising the crosslinked rubber according to claim 9.

12. The rubber article according to claim 11, wherein the rubber article is a conveyor belt.

13. The rubber article according to claim 11, wherein the rubber article is a hose.

## Patentansprüche

1. Kautschukzusammensetzung, umfassend: eine cyclische Polyolverbindung mit einer Hydrocarbylgruppe und einer Hydroxygruppe und mit zwei oder mehr und zehn oder weniger cyclischen Strukturen; Ruß; und eine Kautschukkomponente, wobei die Kautschukkomponente einen Kautschuk auf Dien-Basis enthält und der Kautschuk auf Dien-Basis einen Naturkautschuk enthält.

2. Kautschukzusammensetzung nach Anspruch 1, wobei die cyclische Polyolverbindung durch folgende Formel (1) dargestellt ist: 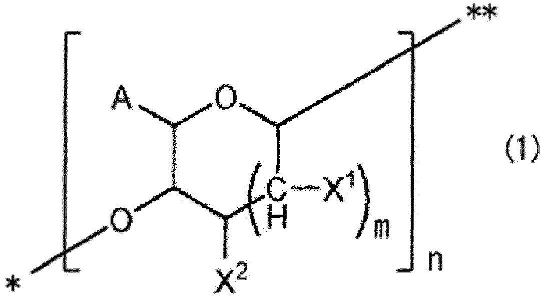 worin A eine Hydrocarbylestergruppe mit 6 bis 30 Kohlenstoffatomen, eine Hydrocarbylethergruppe mit 6 bis 30 Kohlenstoffatomen oder X⁰ ist; m 0 oder 1 ist; n eine sich wiederholende Einheit der cyclischen Struktur darstellt und eine ganze Zahl von 2 bis 10 ist; * eine Bindungsposition zu ** der cyclischen Struktur darstellt, die in der benachbarten sich wiederholenden Einheit enthalten ist; wenn * ein Terminal-Ende ist, * durch X³ dargestellt ist, und wenn ** ein Terminal-Ende ist, ** durch X⁴ dargestellt ist; X⁰ bis X⁴ jeweils unabhängig voneinander -OH, -H oder -CH₂OH sind, vorausgesetzt, dass mindestens drei von X¹ bis X⁴ -OH sind und mindestens eines von A eine Hydrocarbylestergruppe mit 6 bis 30 Kohlenstoffatomen oder eine Hydrocarbylethergruppe mit 6 bis 30 Kohlenstoffatomen ist; und mehrere von A gleich oder verschieden sind, mehrere von X¹ gleich oder verschieden sind und mehrere von X² gleich oder verschieden sind.

3. Kautschukzusammensetzung nach Anspruch 1 oder 2, wobei ein HLB-Wert der cyclischen Polyolverbindung 6 oder mehr beträgt.

4. Kautschukzusammensetzung nach einem der Ansprüche 1 bis 3, wobei der HLB-Wert der cyclischen Polyolmischung 15 oder weniger beträgt.

5. Kautschukzusammensetzung nach einem der Ansprüche 1 bis 4, umfassend die cyclische Polyolverbindung in einer Menge von 0,1 Massenteilen oder mehr und 4 Massenteilen oder weniger, bezogen auf 100 Massenteile der Kautschuckomponente.

6. Kautschukzusammensetzung nach einem der Ansprüche 1 bis 5, wobei die Kautschukkomponente nur aus Naturkautschuk besteht.

7. Kautschukzusammensetzung nach einem der Ansprüche 1 bis 6, wobei die cyclische Polyolverbindung durch folgende Formel (2) dargestellt ist: 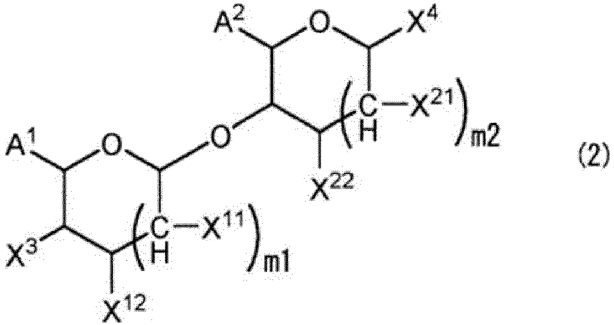 worin A¹ und A² jeweils unabhängig voneinander eine Hydrocarbylestergruppe mit 6 bis 30 Kohlenstoffatomen, eine Hydrocarbylethergruppe mit 6 bis 30 Kohlenstoffatomen oder X⁰ ist; m1 und m2 jeweils unabhängig voneinander 0 oder 1 sind; und X⁰, X¹¹, X¹², X²¹, X²², X³, und X⁴ jeweils unabhängig voneinander -OH, -H oder -CH₂OH sind, vorausgesetzt, dass mindestens drei von X¹¹, X¹², X²¹, X²², X³ und X⁴ -OH sind.

8. Kautschukzusammensetzung nach einem der Ansprüche 1 bis 7,
wobei der Kautschuk auf Dien-Basis zu 70 Massenprozent oder mehr in der Kautschukkomponente enthalten ist; und
wobei der Kautschuk auf Dien-Basis aus Naturkautschuk besteht.

9. Vernetzter Kautschuk, der durch Vernetzen der Kautschukzusammensetzung nach einem der Ansprüche 1 bis 8 hergestellt ist.

10. Reifen, umfassend den vernetzten Kautschuk nach Anspruch 9.

11. Kautschukartikel, umfassend den vernetzten Kautschuk nach Anspruch 9.

12. Kautschukartikel nach Anspruch 11, wobei der Kautschukartikel ein Förderband ist.

13. Kautschukartikel nach Anspruch 11, wobei der Kautschukartikel ein Schlauch ist.

## Revendications

1. Composition de caoutchouc, comprenant : un composé polyol cyclique ayant un groupe hydrocarbyle et un groupe hydroxy et ayant des structures cycliques au nombre de deux ou plus et de dix ou moins ; du noir de carbone ; et un composant de caoutchouc, dans laquelle le composant de caoutchouc contient un caoutchouc à base de diène et le caoutchouc à base de diène contient un caoutchouc naturel.

2. Composition de caoutchouc selon la revendication 1, dans laquelle le composé polyol cyclique est représenté par la formule (1) suivante : 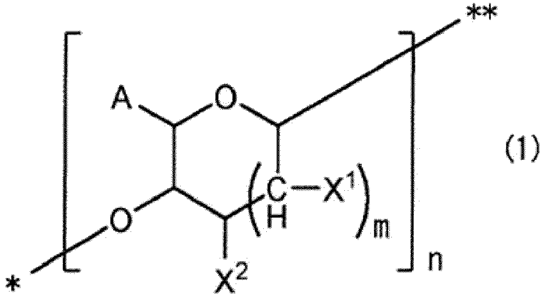 dans laquelle A est un groupe ester d'hydrocarbyle ayant 6 à 30 atomes de carbone, un groupe éther d'hydrocarbyle ayant 6 à 30 atomes de carbone, ou X⁰ ; m vaut 0 ou 1 ; n représente un motif de répétition de la structure cyclique et est un nombre entier de 2 à 10 ; * représente une position de liaison à ** de la structure cyclique contenue dans le motif de répétition adjacent ; lorsque * est une extrémité terminale, * est représenté par X³, et lorsque ** est une extrémité terminale, ** est représenté par X⁴; X⁰ à X⁴ sont chacun indépendamment -OH, -H ou -CH₂OH, à condition qu'au moins trois parmi X¹ à X⁴ soient -OH et qu'au moins l'un des A soit un groupe ester d'hydrocarbyle ayant 6 à 30 atomes de carbone ou un groupe éther d'hydrocarbyle ayant 6 à 30 atomes de carbone ; et plusieurs A sont identiques ou différents, plusieurs X¹ sont identiques ou différents, et plusieurs X² sont identiques ou différents.

3. Composition de caoutchouc selon la revendication 1 ou 2, dans laquelle un rapport hydro-lipophile du composé polyol cyclique vaut 6 ou plus.

4. Composition de caoutchouc selon l'une quelconque des revendications 1 à 3, dans laquelle un rapport hydro-lipophile du composé polyol cyclique vaut 15 ou moins.

5. Composition de caoutchouc selon l'une quelconque des revendications 1 à 4, comprenant le composé polyol cyclique en une quantité de 0,1 partie en masse ou plus et 4 parties en masse ou moins sur la base de 100 parties en masse du composant de caoutchouc.

6. Composition de caoutchouc selon l'une quelconque des revendications 1 à 5, dans laquelle le composant de caoutchouc est constitué uniquement d'un caoutchouc naturel.

7. Composition de caoutchouc selon l'une quelconque des revendications 1 à 6, dans laquelle le composé polyol cyclique est représenté par la formule (2) suivante : 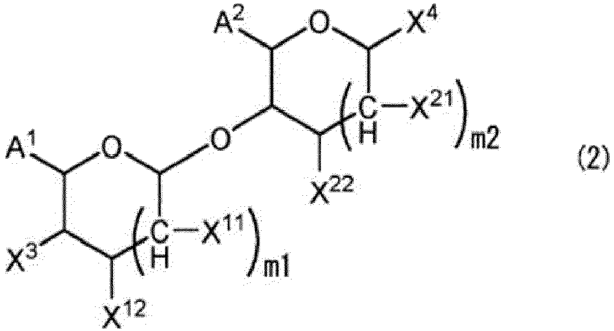 dans laquelle A¹ et A² sont chacun indépendamment un groupe ester d'hydrocarbyle ayant 6 à 30 atomes de carbone, un groupe éther d'hydrocarbyle ayant 6 à 30 atomes de carbone, ou X⁰ ; m1 et m2 valent chacun indépendamment 0 ou 1 ; et X⁰, X¹¹, X¹², X²¹, X²², X³ et X⁴ sont chacun indépendamment -OH, -H, ou -CH₂OH, à condition qu'au moins trois parmi X¹¹, X¹², X²¹, X²², X³ et X⁴ soient -OH.

8. Composition de caoutchouc selon l'une quelconque des revendications 1 à 7,
dans laquelle 70 % en masse ou plus du caoutchouc à base de diène est contenu dans le composant de caoutchouc ; et
dans laquelle le caoutchouc à base de diène est constitué de caoutchouc naturel.

9. Caoutchouc réticulé, qui est préparé par réticulation de la composition de caoutchouc selon l'une quelconque des revendications 1 à 8.

10. Pneu comprenant le caoutchouc réticulé selon la revendication 9.

11. Article en caoutchouc comprenant le caoutchouc réticulé selon la revendication 9.

12. Article en caoutchouc selon la revendication 11, dans lequel l'article en caoutchouc est une bande transporteuse.

13. Article en caoutchouc selon la revendication 11, dans lequel l'article en caoutchouc est un tuyau souple.
